# EUROPÄISCHE PATENTSCHRIFT

(11) **EP 2 750 865 B1**
(45) Veröffentlichungstag und Bekanntmachung des Hinweises auf die Patenterteilung: **14.12.2016**
(21) Anmeldenummer: 12775432.3
(22) Anmeldetag: 29.08.2012
(51) Int. Cl.: B29C 67/00

(54) **VORRICHTUNG UND VERFAHREN ZUM SCHICHTWEISEN AUFBAU VON MODELLEN**
DEVICE AND METHOD FOR CONSTRUCTING MODELS IN LAYERS
DISPOSITIF ET PROCÉDÉ PERMETTANT DE FABRIQUER DES MODÈLES COUCHE PAR COUCHE

(30) Priorität: 31.08.2011 DE 102011111498
(43) Veröffentlichungstag der Anmeldung: 09.07.2014
(73) Patentinhaber: Voxeljet AG, 86316 Friedberg (DE)
(72) Erfinder: HARTMANN, Andreas, Dominik, 86391 Stadtbergen (DE); EDERER, Ingo, 82269 Geltendorf (DE)
(74) Vertreter: Helbig, Christian
(86) Internationale Anmeldenummer: PCT/DE2012/000870
(87) Internationale Veröffentlichungsnummer: WO 2013/029594

(56) Entgegenhaltungen:
- WO-A1-01/72502
- WO-A1-2005/070657
- WO-A2-2005/097476
- DE-A1-102009 036 153
- US-A1- 2004 231 593
- US-B1- 6 596 224

## Beschreibung

Die Erfindung betrifft eine Vorrichtung und ein Verfahren zum schichtweisen Aufbau von Modellen gemäß dem Oberbegriff des Anspruchs 1 beziehungsweise Anspruchs 10,

In der europäischen Patentschrift EP 0 431 924 B1 wird ein Verfahren zur Herstellung dreidimensionaler Objekte aus Computerdaten beschrieben. Dabei wird ein erstes Material, hier ein Partikelmaterial, in einer dünnen Schicht auf eine gegebenenfalls mit einem Behälter umfassten Bauplattform aufgetragen und darauf anschließend ein zweites Material aufgebracht, das mit dem ersten Material einen Festkörper bilden kann. Gemäß der EP 0 431 924 B1 ist beispielsweise als erstes Material ein Partikelmaterial vorgesehen und dieses wird anschließend selektiv mittels eines Druckkopfes mit einem Bindermaterial bedruckt. Der mit dem Binder bedruckte Partikelbereich verklebt und verfestigt sich unter dem Einfluss des Binders und gegebenenfalls eines zusätzlichen Härters. Anschließend wir die Plattform um eine Schichtdicke in einen Bauzylinder abgesenkt und mit einer neuen Schicht Partikelmaterial versehen, die ebenfalls, wie oben beschrieben, bedruckt wird. Diese Schritte werden wiederholt, bis eine gewisse, erwünschte Höhe des Objektes erreicht ist. Aus den bedruckten und verfestigten Bereichen entsteht so ein dreidimensionales Objekt.

Das, wie beschrieben, aus verfestigtem Partikelmaterial hergestellte Objekt ist nach seiner Fertigstellung in losem Partikelmaterial eingebettet und wird anschließend davon befreit.

In ähnlicher Weise arbeiten auch andere Pulver-gestützte Rapid-Prototyping-Prozesse, wie z.B. das selektive Lasersintern oder das Elektron-Beam-Sintern bei denen jeweils ebenso ein loses Partikelmaterial schichtweise ausgebracht und mit Hilfe einer gesteuerten physikalischen Strahlungsquelle selektiv verfestigt wird.

Im Folgenden werden alle diese Verfahren unter dem Begriff "dreidimensionale Druckverfahren" oder 3D-Druckverfahren zusammengefasst.

Aus der DE 10 2006 030 350 A1 ist ein weiteres Verfahren zum Aufbauen eines Schichtkörpers aus losem Partikelmaterial bekannt. Hierbei werden die Bauteile auf einer Fläche ohne umschließenden Formkasten erstellt. Eine Wandung um die Fläche wird stattdessen kontinuierlich bei Verfahren, wie das Bauteil selbst, aufgebaut und verhindert, dass ungebundenes Partikelmaterial von der Fläche abläuft. Das ganze Verfahren läuft auch derart ab, dass die Bauplattform auf der das Teil erstellt wird, vertikal nicht bewegt wird. Stattdessen wird ein Tragrahmen, an dem die Komponenten zur Schichtgenerierung angebracht sind, schichtweise in vertikaler Richtung verfahren.

In der nachveröffentlichten Patentanmeldung DE 10 2010 013 733 wird eine Vorrichtung beschrieben, bei der ein Tragrahmen mit den schichterzeugenden Werkzeugen, schichtweise angehoben wird.

Bei einer solchen Lösung können jedoch Probleme auftreten, da die enthaltene Verfahreinheit in Z-Richtung neben den schichterzeugenden Werkzeugen auch die vertikalen Verfahreinheiten und einen schweren Tragrahmen anheben, so dass der Tragrahmen steif ausgelegt werden muss und nur an wenigen Punkten (vorzugsweise den 4 Gantry-Punkten) sinnvoll aufgehängt werden kann. Eine steife Ausführung des Tragrahmens führt aber zu einer Ausführung von hohem Gewicht, was wiederum hohe Ansprüche an die Z-Achse stellt. Ab einer gewissen Länge kann der dafür notwendige technische Aufwand sich als nicht mehr wirtschaftlich erweisen.

Darüberhinaus hat es sich auch gezeigt, dass mit zunehmendem Verfahrweg in der horizontalen Ebene die Enden des Tragrahmens weit auskragen und damit zum Schwingen neigen. Begünstigt wird dies noch durch verschiedenen Systemkomponenten, wie beispielsweise einem schwingungsangeregten Beschichter, Schwingungsaktoren zur Verbesserung des Materialflusses innerhalb der Materialversorgungskette und Beschleunigungen Verfahreinheiten der Prozesswerkzeuge

Darüberhinaus sind auch sie Genauigkeitsanforderungen an ein Achssystem mit mehreren Achseinheiten ist sehr hoch. Ein angemessener Lauf muss durch hohe Fertigungsgenaulgkeiten oder eine relativaufwendige Justierung erreicht werden.

Aus der EP 0 500 225 A1 ist es darüberhinaus bekannt mittels einem Direktdruckverfahren das gesamte Baumaterial mit einem portalartig über einer Fläche angeordneten Druckkopf aufzutragen.

Desweiteren beschreibt die WO2005/070657A1 ein Robotorsystem, das ein verfahrbares Robotorsystem einschliesslich eines Overheadstrahlers beinhaltet, das zwischen zwei und von diesen getragenen zumindest zwei Seiteneinheiten verschiebbar auf zwei Schienen montiert ist. Weiterhin enthält dieser Aufbau eine Extrusionsnase, die mit dem Overheadstrahler verbunden ist.

Die WO2005/09747 A2 beschreibt Verfahren und Vorrichtungen zur Herstellung von 3D-Modellen, das digital gespeichert ist. Die Vorrichtung beinhaltet eine stationäre Bauebene, auf die sukzessive Schichten von Baumaterial aufgetragen werden. Ein Druckkopf befindet sich über der Bauebene und dieser trägt ein Bindermaterial in vorbestimmtem Muster auf jede Schicht auf, wodurch das 3D-Modell hergestellt wird.

Ausgehend hiervon ist es Aufgabe der vorliegenden Erfindung eine elnfachere, erwelterbare und leicht verstellbare Vorrichtung bezlehungsweise ein einfaches und vielseitiges Verfahren der eingangs genannten Art bereitzustellen.

Die Aufgabe wird durch die in den Ansprüchen 1 und 10 näher bezeichneten Ausführungsformen gelöst.

Vorteilhafte Ausgestaltungen der Erfindung sind in den Unteransprüchen dargestellt.

In einem Aspekt betrifft die Erfindung eine Vorrichtung nach Anspruch 1 zum schichtweisen Aufbau von Modellen, wobei ein Bereich zum Aufbau von Modellen, vorzugsweise eine Bauplattform und eine Materialauftragsvorrichtung zum Auftragen von Material auf den Bereich vorgesehen sind, die Materlalauftragsvorrichtung über dem Bereich verfahrbar angeordnet ist, wobei die Materialauftragsvorrichtung derart als Portal angeordnet ist, dass sie zumindest über zwei sich an gegenüberliegenden Seiten des Bereichs angeordnete Linearführungen über dem Bereich verschiebbar ist, und derart um den Bereich angeordnet ist, dass mit zumindest zwei sich seitlich des Bereichs erstreckenden Abschnitten ein Portal gebildet wird. Dabei ist gemäß der vorliegenden Erfindung zumindest eine weitere Materialauftragsvorrichtung zum Auftragen eines weiteren Materials auf den Bereich vorgesehen.

Gemäß der vorliegenden Erfindung sind dabei die Linearführungen vorgesehen und die Materialauftragsvorrichtung ist derart um die Fläche angeordnet ist, dass mit zumindest zwei sich seitlich der Fläche erstreckenden Abschnitten ein Portal gebildet wird.

Unter einer Fläche ist dabei ein Bereich zu verstehen, auf den ein Materialauftrag zum Aufbau von Modellen erfolgt. Dies kann eine gesonderte Bauplattform sein oder auch nur ein Bereich einer Bodenfläche.

Die Fläche muss dabei auch nicht unbedingt der Baumaterialauftragsebene entsprechen, beziehungsweise zu dieser parallel sein. So könnte es beispielsweise sein, dass für einen kontinuierlichen Aufbauprozess die Baumaterialauftragsebene einen Winkel zur Fläche aufweist.

Die Materialauftragsvorrichtung ist eine Vorrichtung zum Aufbringen vom Material auf die Fläche. Dies kann beispielsweise eine Materialbeschichter oder ein Flüssigkeitsbeschichter zum Aufbringen von Schichten sein. Ebenso ist beispielsweise auch ein Druckkopf zum selektiven Aufbringen von Material hierfür denkbar.

Die Materialauftragsvorrichtung ist dabei für ein Material vorgesehen, das für das jeweilig verwendete 3-D-Verfahren geeignet ist.

So wäre es beispielsweise möglich, dass das eine oder mehrere Materialien flüssig und/oder fest, schichtweise in Folien oder als Partikelmaterial und/oder gedruckt und/oder extrudiert aufgetragen wird. Weiterhin können beispielsweise Strahlungsquellen, wie Laser, LED-Belichtungsköpfe, vorgesehen sein, um u.a. einen selektiven Laserprozess oder Sinterprozess oder auch einfach einen Aushärtprozess durchzuführen.

Die Materialauftragsvorrichtung oder mehrere davon sind daher an den jeweils verwendeten Aufbauprozess angepasst.

So ist es beispielsweise auch möglich, dass Material flüssig oder fest schichtweise aufgetragen wird und anschließend über eine zweite Materialauftragsvorrichtung selektiv ein zweites, mit dem ersten aushärtbaren Material aufgetragen wird. Die zweite Materialauftagvorrichtung könnte dabei gemeinsam mit der ersten Materialauftragsvorrichtung mit einer Linearführung in Eingriff stehen oder auch von der ersten getrennt mit einer Linearführung in Eingriff stehen.

Weiter wäre auch ein Einsatz bei einem Druckverfahren mit direktem Materialauftrag durch einen Druckkopf, zum Beispiel Poly-Jet Modeling, Multi-Jet Modeling oder bei Extrusionsverfahren mit direktem Materialauftrag durch eine Düse zum Beispiel dem Fused-Deposition-Modeling denkbar. Wenn dies der Fall ist, dann könnte die Materialauftragsvorrichtung eine Partikelmaterialbeschichtervorrichtung und/oder einen Druckkopf und/oder einen Extruder und/oder einen Folienbeschichter umfassen.

Die Linearführungen sind dabei Vorrichtungsteile die zum Führen der Portalteile in linearer Richtung geeignet sind. So wäre es beispielsweise denkbar, dass die eine Bauplattform auf einer Bodenebene angeordnet ist und an zwei sich gegenüberliegenden Seiten zwei Profile angeordnet sind, an die die Portalteile angelenkt sind und an damit linear verschiebbar sind.

Als ein Vorteil der vorliegenden Erfindung hat es sich erwiesen, dass für den Fall, dass die Verfahrlänge einer Anlage erweitert werden soll, nicht der gesamte Tragrahmen verlängert und neu ausgelegt werden muss, sondern einfach die Linearführung entsprechend länger ausgewählt werden muss. Alle anderen Komponenten bleiben identisch.

Darüberhinaus ist die Materialauftragsvorrichtung als Portal angeordnet, das über stabile Linearführungen gesteuert wird, die beispielsweise am Boden befestigt sein können. Somit ist der Aufbau einer erfindungsgemäßen Vorrichtung sehr stabil und erfordert nur eine sehr geringe zusätzlich Aufstellfläche.

Da nun also lediglich Portale und keine aufwändigen Rahmengestelle vorgesehen sind ist nach Abschluss eines Bauprozesses die erstellte Form gut zugänglich.

Gemäß einer Ausführungsform ist dabei die weitere Materialauftragsvorrichtung ebenso an dem Portal vorgesehen, so dass auch hier die oben beschriebenen Vorteile zutreffen.

Um den Auftrag beider Materialauftragsvorrichtungen etwas unabhängiger und eventuell auch sogar zeitversetzt aber teilweise auch gleichzeitig voneinander gestalten zu können ist es auch vorgesehen, dass die weitere Materialauftragsvorrichtung an einem weiteren Portal vorgesehen ist.

Gemäß einer bevorzugten Ausführungsform der vorliegenden Erfindung umfasst die Materialauftragsvorrichtung eine Partikelmaterialbeschichtervorrichtung und/oder einen Druckkopf.

Dabei können an einem Portal beispielsweise eine Partikelmaterialschichtauftragsvorrichtung sowie ein Druckkopf zum selektiven Auftragen für das jeweilige Partikelmaterial geeignete Bindermaterial vorgesehen sein.

Darüberhinaus ist es auch möglich, dass ein Portal eine Licht-, eine Strahlungs- und/oder eine Wärmequelle aufweist.

Als vorteilhaft hat es sich zudem erwiesen, wenn bei einer erfindungsmäßen Vorrichtung die Materialauftragsvorrichtung im wesentlichen senkrecht zu dem Bereich verfahrbar angeordnet ist. Dies bedeutet, dass die Materialauftragsvorrichtung auch in der Höhe verfahren werden kann, sodass eine solche Vorrichtung auch für Systeme einsetzbar ist, bei denen die Bauplattform, auf der ein Objekt aufgebaut wird, nicht höhenverfahrbar ist Es hat sich gezeigt, dass bei einer solchen Ausführungsform ein Verfahren der Materialauftragsvorrichtung, der weitere Materialauftragsvorrichtung, der Licht-, Strahlungs- und/oder Wärmequelle im Wesentlichen senkrecht zur Auftragsebene vorzugsweise entlang der Portalteile erfolgen kann.

Das weitere Portalteil könnte dabei ebenso wie das erste Portal mit der Linearführung oder aber mit einer weiteren Linearführung in Eingriff stehen. Es sollen die Portalteile aber jedenfalls unabhängig voneinander auf der oder den Linearführungen verfahrbar sein.

Wenn nun zwei Portale vorgesehen sind, kann es insbesondere vorteilhaft sein, wenn die beiden Materialauftragsvorrichtungen unterfahrbar beziehungsweise überfahrbar sind. Dies bedeutet, dass ein Portal unter dem anderen hindurchfahren kann.

Ist die erfindungsgemäße Vorrichtung derart vorgesehen, kann in beiden Fahrtrichtungen beschichtet werden. Dadurch werden Leerfahrten vermieden. Dies bringt insbesondere dann auch einen Vorteil, wenn bei den verwendeten Druckköpfen die Druckbreite der Baufeldbreite entspricht.

Gemäß einer weiteren bevorzugten Ausführungsform der erfindungsgemäßen Vorrichtung ist mindestens ein Peripheriegerät der Materialauftragseinrichtung fest in der Vorrichtung positioniert und unabhängig von der aktuellen Bauhöhe von der Auftragseinrichtung anfahrbar.

Unter Peripheriegeräten sind dabei beispielsweise die Reinigungseinheit des Druckkopfes oder die Materialversorgung des Beschichters zu verstehen. Sind diese nicht am Portal, sondern irgendwo sonst in der Vorrichtung fest positioniert, müssen diese nicht mit dem Portal angehoben werden.

Gemäß einem weiteren Aspekt der vorliegenden Erfindung wird auch ein Vertahren nach Anspruch 10 zum schichtweisen Aufbau von Modellen bereitgestellt, wobei eine Fläche zum Aufbau von Modellen, vorzugsweise eine Bauplattform und zumindest eine Materialauftragsvorrichtung zum Auftragen von Material auf die Fläche vorgesehen sind.

Die Materialauftragsvorrichtung verfährt über der Fläche entlang zumindest zwei sich an gegenüberliegenden Seiten der Fläche angeordnete Linearführungen in Richtung der Auftragsebene.

Das Portal ist dabei derart angeordnet, dass die Materialauftragsvorrichtung zumindest entlang zwei sich an gegenüberliegenden Seiten des Bereichs angeordnete Linearführungen über dem Bereich verfährt, und derart um den Bereich angeordnet ist, dass mit zumindest zwei seitlich des Bereichs erstreckenden Abschnitten ein Portal gebildet wird. Gemäß der vorliegenden Erfindung ist zumindest eine weitere Materialauftragsvorrichtung an einem weiteren Portal vorgesehen und ein weiteres Material wird auf den Bereich aufgebracht.

Die Linearführungen sind dabei vorzugsweise unterhalb der Materialauftragsvorrichtung angeordnet und zumindest über jeweils ein nach oben im Wesentlichen in Richtung senkrecht zur Bauplattform erstreckendes Portalteil in Eingriff und die beiden Portalteile zumindest über die Materialauftragsvorrichtung miteinander verbunden und die Materialauftragsvorrichtung verfährt entlang der Linearführungen über der Fläche.

Gemäß der vorliegenden Erfindung verfährt die Materialauftragsvorrichtung auch senkrecht zur Fläche, was insbesondere bei der Verwendung von nicht höhenverfahrbaren Bauplattformen Vorteile bietet.

Werden bei einer bevorzugten Ausgestaltung des erfindungsgemäßen Verfahrens mehrere eigenständige Portale verwendet, so können diese gleichzeitig unterschiedliche Bauprozesse durchführen. Das bedeutet, dass auf einer Fläche in verschiedenen Bereichen verschiedene, voneinander unabhängige Bauprozesse stattfinden können.

Daneben wäre es aber ebenso denkbar, dass von mehreren eigenständigen Portalen gleichzeitig ein gemeinsamer Bauprozess durchgeführt werden kann.

Die zumindest zwei Portale können sich auch gemäß einer noch weiteren bevorzugten Ausführungsform während oder nach einem Prozessschritt gegenseitig unterfahrbaren beziehungsweise überfahrbaren.

Zur näheren Erläuterung wird die Erfindung anhand bevorzugter Ausführungsbeispiele in den folgenden Zeichnungen dargestellt.

In der Zeichnung zeigt dabei:
Figur 1 bis 4 einen Verfahrensablauf gemäß einer bevorzugten Ausführungeform der vorliegenden Erfindung, wobei ein Pulvermaterialbeschichter und ein Durckkopf ein eigenes Portal aufweisen;
Figur 5 und 6 ein höhenverstellbares Peripheriegerät gemäß einer weiteren bevorzugten Ausführungsform, das sich an die Bauhöhe anpasst;
Fig. 7 ein höhenverstellbares Peripheriegerät gemäß einer weiteren bevorzugten Ausführungsform, sich an die Baufeldgröße anpasst;
Fig. 8-9 ein stationäres Peripheriegerät;
Fig. 10 eine Ausführungsform mit Einzelportalen;
Fig. 11 eine Ausführungsform gemäß Fig. 10, wobei zwei Einzelportale gemeinsam ein Bauteil erstellen;
Fig. 12 eine Ausführungsform, bei der drei Einzelportale eigenständig Bauteile erstellen;
Fig. 13 eine Ausführungsform, bei der ein Einzelportal mehrere Bauteile fertigt; und
Fig. 14 -18 den Ablauf eines erfindungsgemäßen Verfahrens gemäß einer besonders bevorzugten Ausführungsform.

Gemäß der vorliegenden Erfindung wird eine Vorrichtung bzw. ein Verfahren zum Herstellen dreidimensionaler Modelle mittels 3-D Druckverfahren auf eine Fläche beschrieben, wobei Materialauftragsvorrichtungen (beispielsweise Partikel material beschichtereinheit bzw. Druckkopfeinheit) vorgesehen sind, um auf eine Fläche das jeweilige Material aufzutragen. Die Materialauftragsvorrichtungen werden dabei gemäß der vorliegenden Erfindung an einem oder mehreren Portalen vertikal bewegt.

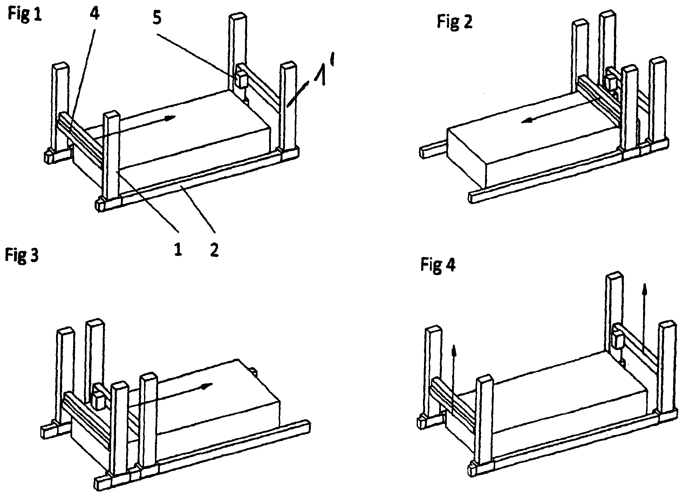

Fig. 1 bis 4 zeigen den Ablauf eines erfindungsgemäßen Verfahrens nach einer bevorzugten Ausführungsform. Hierbei wird auf einer Fläche mit einem Beschichter 4 Partikelmaterial auf die Fläche aufgebracht. Der Beschichter 4 ist dabei in dem Portal 1 enthalten. Das Portal 1 verfährt über der Fläche auf den Lineareinheiten 2. Anschließend fährt das Portal 1 wieder in seine Ausgangsposition zurück (siehe Fig. 2). Nun verfährt das Portal 1', das den Druckkopf 5 enthält unabhängig auch auf den Lineareinheiten 2, die fest mit dem Boden verbunden sind (Fig. 3). Daran anschließend werden beide Materialzuführeinrichtungen 4, 5 um eine Schichthöhe entlang der Portalseitenteile nach oben verfahren, was in Fig. 4 dargestellt ist und der der beschriebene Prozess kann wieder beginnen.

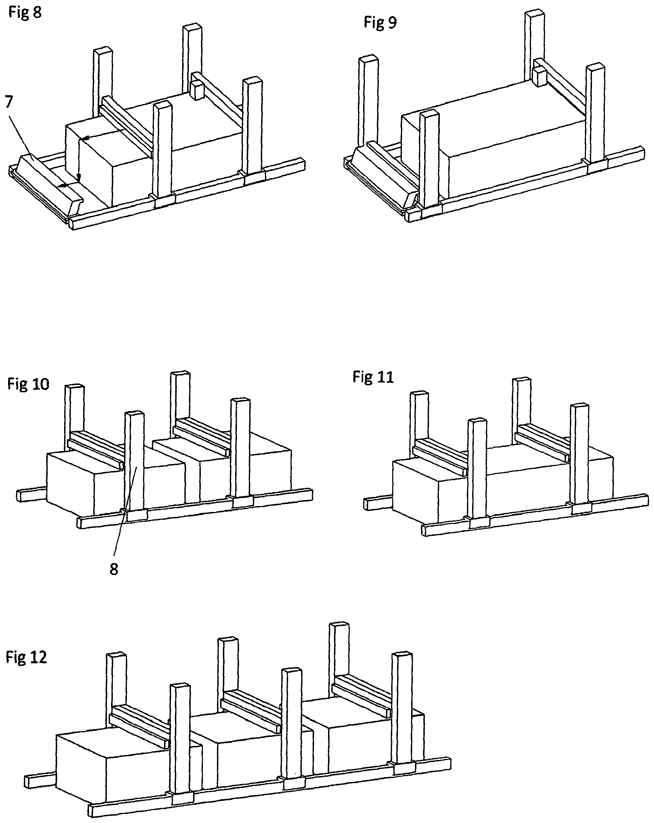

Die mit bezug auf die Fig. 1 bis 4 beschrieben Ausführungsform weist für jede Materialzuführung ein eigenes Portal 1, 1' auf. Es ist aber auch möglich alle Werkzeuge zur Schichtgenerierung an nur einem Portal anzubringen (siehe Pos.8 in Fig.10).

Werden mehrere Portale 1, 1` eingesetzt, ist es möglich die Portale 1, 1` jeweils mit einem eigenen Antrieb zu versehen und nur eine gemeinsame Führungsbahn 2 zu nutzen. Es ist aber auch möglich jedem Portaleine eigene Lineareinheit 2 (Antrieb mit Führung) zuzuordnen.

Bei einem Verfahren zum Aufbau von Modellen mittels Partikelmaterial und selektivem bedrucken des Partikelmaterials werden folgende Fahrtrichtungen unterschieden:
- Fahrtrichtung zur Positionierung des Druckkopfes
- Fahrtrichtung der Druckfahrt des Druckkopfes
- Beschichtungsrichtung des Beschichters

In welcher Richtung die längste Fahrt angeordnet wird, ist abhängig vom Verfahren bzw. der Drucktaktik. Es wird als sinnvoll erachtet die längste Achse (z.B. die Achse in Beschichtungsrichtung) fest mit dem Boden zu verbinden.

Die feste Anbindung der Führungseinheiten am Boden schließt Durchbiegung und Schwingungen unabhängig von der Verfahrlänge aus.

Durch den Verzicht auf einen vertikal bewegten Tragrahmen, wie es aus dem Stand der Technik bekannt ist, werden bei einer erfindungsgemäßen Ausführung deutlich Kosten und Aufwand bei der Auslegung, Konstruktion, Herstellung, Transport und Montage der Vorrichtung eingespart.

Soll eine Anlage vergrößert werden, ist dies mit vergleichsweise geringem Aufwand möglich. Die Montage reduziert sich lediglich auf den Tausch oder die Erweiterung der Lineareinheiten. Bei geschickter Gestaltung muss lediglich die Führung verlängert werden.

Die Auftragseinheiten und die Peripherie (Druckkopfreinigung, Druckkopfparkstation, Beschichterbefüllstation) können optional mit bewegt werden, oder auch fest neben der Bauplattform positioniert werden.

Das kastenlose Bauen der Objekte ermöglicht, dass die Baufeldgröße beliebig variiert werden kann.

Um die Bauzeit möglichst gering zu halten kann es sinnvoll sein, die zughörigen Peripheriegeräte mit den entsprechenden Portalen mitfahren zu lassen (Pos.8 in Fig.10), damit keine zusätzlichen Fahrten zu den Peripheriegeräten notwendig werden.

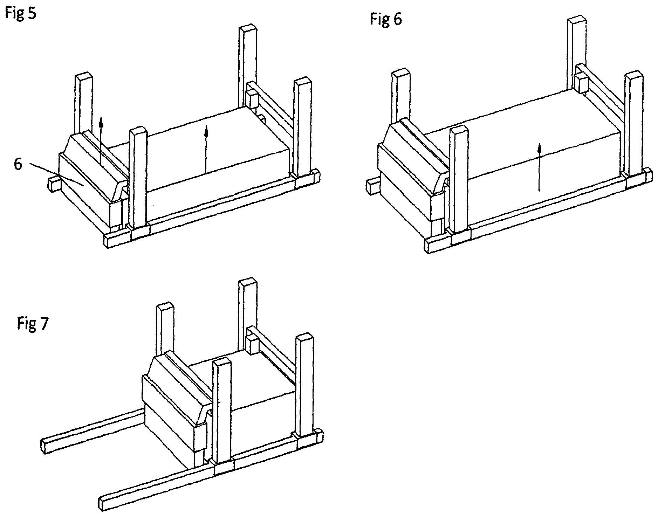

Daneben können die Peripheriegeräte 6 aber auch stationär am Baufeldrand angeordnet sein. Dort können Sie beispielsweise in vertikaler Richtung mit einer eigenen Hubeinrichtung entsprechend der aktuellen Bau-bzw. Werkzeughöhe positioniert werden (Fig. 5-6).

Das Peripheriegerät 6 weist hier also eine eigene Hubeinrichtung auf und kann sich damit der aktuellen Bauhöhe und damit der vertikalen Position der Materialauftragseinrichtung bzw. der Härtungseinrichtung anpassen. Der Unterschied zwischen Fig. 5 und Fig. 6 ist, dass in Fig. 6 sowohl Peripheriegerät und Bauteil als auch das Werkzeug höher sind.

Da eine Auftragseinrichtung an einem Portal in mindestens zwei Richtungen positioniert werden kann, besteht die Möglichkeit die dazugehörigen Peripheriegeräte 7 zu fixieren und damit nicht zu bewegen. Dann wird das Peripheriegerät 7 direkt von der Auftragseinheit 4, 5 angefahren (Fig.8-9).

Fahren die Peripheriegeräte 6 nicht am Portal mit, kann deren Position an die Baufeldgröße vor Baubeginn angepasst werden (Fig.7).

Dies stellt vor allem dann eine bevorzugte, kostengünstige Lösung dar, wenn eine vertikale Positionierung der Peripherie und Prozessmedien aufwendig ist.

In einer bestimmten Ausführung trägt ein Portal alle Auftragseinheiten und die dazugehörige Peripherie sowie einen eigenen Linearantrieb. Es besteht hier nun die Möglichkeit mehrere dieser Portale hintereinander platzsparend anzuordnen. So können mit mehreren Portalen schnell große Teile aufgebaut werden. Weiter können auch mehrere Bauteile parallel erstellt werden. (Fig.10-12).

Die Fig. 10 zeigt eine weitere bevorzugte Ausführungsform der Erfindung, bei der mehrere Portale vorgesehen sind. Hierbei weist jedes Portal den kompletten Satz an Auftragseinrichtungen und die dazugehörigen Peripheriegeräte auf. Jedes Portal agiert dabei als unabhängige Maschine und erstellt ein eigenes Bauteil.

In der Figur 11 ist der gleiche Aufbau der Vorrichtung, wie in Fig. 10 gezeigt, allerdings erstellen hier die beiden Einzelportale gemeinsam ein Bauteil.

Dies kann nun auch beliebig erweitert werden, so zeigt beispielsweise Fig. 12 drei Einzelportale, die unabhängig voneinander eigenständig Bauteile erstellen.

Befinden sich Hubachsen an einem verfahrenden Portal, können diese ganz aus dem Fertigungsbereich entfernt werden (Fig. 12). Bei ausreichend langem Verfahrweg kann direkt neben dem fertiggestellten Bauteil ein neuer Bauprozess gestartet werden.

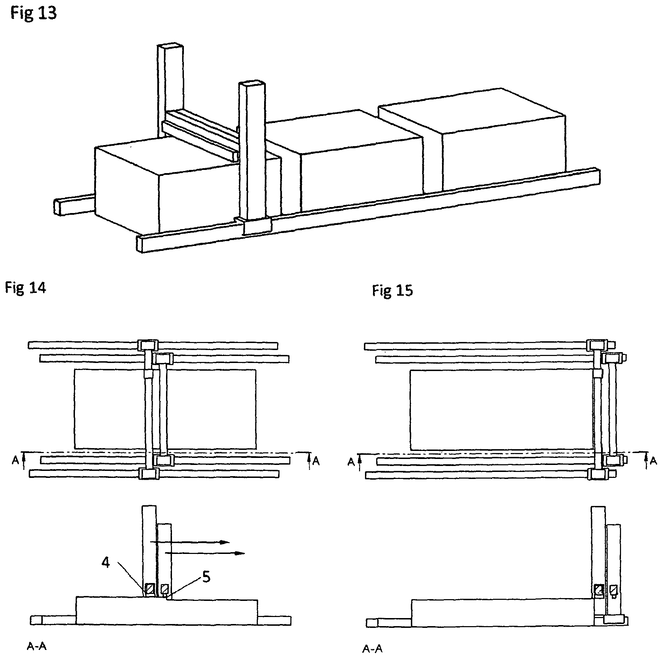

Daneben ist es auch denkbar, dass ein Einzelportal mehrere Bauteile parallel oder einzeln fertigt, wie dies in Fig. 13 dargestellt ist. Die fertiggestellten Bauteile sind zur Weiterbearbeitung voll zugänglich.

Das Verfahren bietet erstmals auch die Möglichkeit einer neuen Bautaktik: Während bei konventionellen Prozessen Beschichter und Druckkopf immer auf gleichem Niveau sind, können hier beide in Z-Richtung relativ zueinander verfahren.

Bei geschickter Ausführung und Anordnung der Portale, kann ein Portal vom anderem unterfahren werden. Bei herkömmlichen Prozessen muss eine Auftragseinheit der Anderen ständig ausweichen, so dass Leerfahrten entstehen, in denen die jeweilige Auftragseinheit inaktiv bleibt.

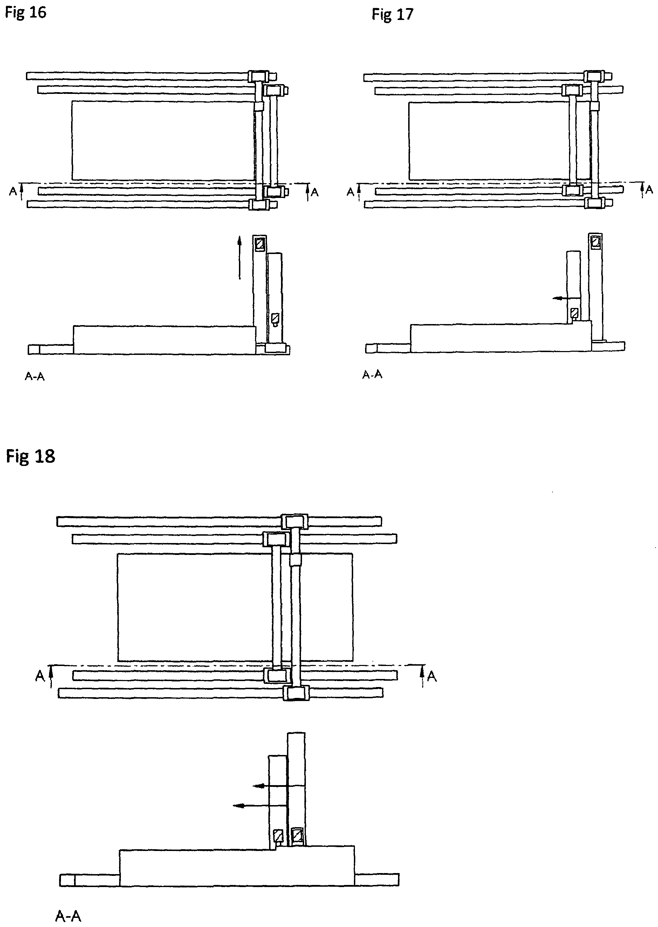

In Fig. 4 -15 folgt der Druckkopf dem Beschichter und bedruckt das frisch beschichtete Baufeld. Dann hebt das Portal den Druckkopf so an, dass er vom Beschichterportal unterfahren werden kann (Fig. 16) und der Beschichter auf eine neue Z-Position fährt und eine neue Schicht aufträgt (Fig. 17). In Fig. 18 fährt der Druckkopf dann wieder auf die aktuelle Schichthöhe und bedruckt das frisch beschichtete Baufeld.

Bei dieser gezeigten bevorzugten Ausführungsform kann die die Führungsposition aktiv getauscht werden. In der dargestellten Abfolge von Fig.14-Fig. 17 wir dies ersichtlich. Zunächst folgt der Druckkopf dem Beschichter und bedruckt das frisch beschichtete Baufeld. Im nächsten Schritt hebt das Druckkopfportal den Druckkopf soweit an, dass es vom Beschichterportal unterfahren werden kann. Der Beschichter beginnt wieder mit der Erstellung einer frischen Schicht in entgegengesetzter Richtung. Während dessen fährt der Druckkopf auf das aktuelle Niveau und kann die frische Schicht erzeugen. Es ist aber auch möglich dass der Beschichter dem Druckkopf folgt, dann müssen die Anordnungen an den jeweiligen Portalen getauscht werden.

Das bedeutet, dass der Beschichter erstmals in jeder Fahrtrichtung, das heißt bei jeder Fahrt beschichten kann. Ebenso können erstmals Druckköpfe deren Druckbreite der Baufeldbreite entsprechen, in jeder Fahrtrichtung und bei jeder Fahrt beschichten. Damit wird die Effizienz des gesamten Systems erheblich gesteigert.

## Patentansprüche

1. Vorrichtung zum schichtweisen Aufbau von Modellen, wobei ein Bereich zum Aufbau von Modellen, vorzugsweise eine Bauplattform und eine Materialauftragsvorrichtung (4) zum Auftragen von Material auf den Bereich vorgesehen sind, die Materialauftragsvorrichtung (4) über dem Bereich verfahrbar angeordnet ist, wobei die Materialauftragsvorrichtung (4) derart als Portal (1) angeordnet ist, dass sie zumindest über zwei sich an gegenüberliegenden Seiten des Bereichs angeordnete Linearführungen (2) über dem Bereich verschiebbar ist, und derart um den Bereich angeordnet ist, dass mit zumindest zwei sich seitlich des Bereichs erstreckenden Abschnitten ein Portal (1) gebildet wird, **dadurch gekennzeichnet, dass** zumindest eine weitere Materialauftragsvorrichtung (5) zum Auftragen eines weiteren Materials auf den Bereich vorgesehen ist und die weitere Materialauftragsvorrichtung (5) an einem weiteren Portal (1') vorgesehen ist, die Materialauftragsvorrichtungen (4, 5) im Wesentlichen senkrecht zu dem Bereich verfahrbar sind und die Portale unabhängig auf den Linearführungen (2) verfahrbar sind.

2. Vorrichtung nach einem der vorhergehenden Ansprüche,
**dadurch gekennzeichnet, dass** an einem der Portale (1, 1') oder an noch weiteren Portalen eine Licht-, eine Strahlungs- und/oder eine Warmequelle vorgesehen ist.

3. Vorrichtung nach einem der vorhergehenden Ansprüche,
**dadurch gekennzeichnet, dass** das weitere oder alle Portale mit der Linearführung in Eingriff steht.

4. Vorrichtung nach einem der Ansprüche 1 und 2,
**dadurch gekennzeichnet, dass** das weitere Portal mit einer weiteren Linearführung in Eingriff steht.

5. Vorrichtung nach einem der vorhergehenden Ansprüche,
**dadurch gekennzeichnet, dass** die Materialauftragsvorrichtung (4) eine Partikelmaterialbeschichtervorrichtung umfasst und die weitere Materialauftragsvorrichtung (5) einen Druckkopf und/oder einen Extruder und/oder einen Folienbeschichter umfasst.

6. Vorrichtung nach einem der vorhergehenden Ansprüche,
**dadurch gekennzeichnet, dass** die zumindest eine Licht-, Strahlungs- und/oder Wärmequelle im Wesentlichen senkrecht zum Bereich verfahrbar angeordnet ist.

7. Vorrichtung nach Anspruch 6,
**dadurch gekennzeichnet, dass** ein Verfahren der Materialauftragsvorrichtungen (4, 5), der Licht-, Strahlungs- und/oder Warmequelle entlang seitlicher Portalteile erfolgen kann.

8. Vorrichtung nach einem der vorhergehenden Ansprüche,
**dadurch gekennzeichnet,dass** die Portale (1, 1') gegenseitig unterfahrbar beziehungsweise überfahrbar sind.

9. Vorrichtung nach einem der vorhergehenden Ansprüche,
**dadurch gekennzeichnet,dass** ferner mindestens ein Peripheriegerat in der Vorrichtung angeordnet ist und unabhangig von einer Bauhohe von den Portalen (1, 1') anfahrbar ist.

10. Verfahren zum schichtweisen Aufbau von Modellen, wobei ein Bereich zum Aufbau von Modellen, vorzugsweise eine Bauplattform und zumindest eine Materialauftragsvorrichtung (4) zum Auftragen von Material auf den Bereich vorgesehen sind, die Materialauftragsvorrichtung (4) über dem Bereich verfährt, wobei die Materialauftragsvorrichtung (4) derart als Portal (1) angeordnet ist, dass sie zumindest entlang zwei sich an gegenüberliegenden Seiten des Bereichs angeordnete Linearführungen (2) über dem Bereich verfährt, und derart um den Bereich angeordnet ist, dass mit zumindest zwei seitlich des Bereichs erstreckenden Abschnitten ein Portal (1) gebildet wird, **dadurch gekennzeichnet, dass** zumindest eine weitere Materialauftragsvorrichtung (5) an einem weiteren Portal (1') vorgesehen ist und ein weiteres Material auf den Bereich aufgebracht wird, wobei die Materialauftragsvorrichtungen (4, 5) im Wesentlichen senkrecht zu dem Bereich verfahren werden können und die Portale unabhängig voneinander auf den Linearführungen (2) verfahren werden können.

11. Verfahren nach Anspruch 10,
**dadurch gekennzeichnet, dass** zumindest zwei Portale (1, 1') sich während oder nach einem Prozessschritt gegenseitig unterfahren beziehungsweise überfahren können.

12. Verfahren nach einem der Ansprüche 10 bis 11,
**dadurch gekennzeichnet, dass** mehrere eigenständige Portale (1, 1') gleichzeitig unterschiedliche Bauprozesse durchführen.

13. Verfahren nach einem der Ansprüche 10 bis 12,
**dadurch gekennzeichnet,dass** mehrere eigenständige Portale (1 , 1')gleichzeitig einen gemeinsamen Bauprozess durchführen.

## Claims

1. A device for the layered construction of models, wherein there are provided a region for the construction of models, preferably a construction platform, and a material application device (4) for applying material onto said region, said material application device (4) being arranged so as to be movable over said region, and said material application device (4) being arranged as a portal (1) such that it can be moved over said region via at least two linear guides (2) arranged on opposite sides of said region, and said material application device (4) further being arranged around said region such that a portal (1) is formed with at least two portions extending laterally of said region, **characterised in that**
at least one further material application device (5) for applying a further material onto said region is provided, said further material application device (5) being provided at a further portal (1'), the material application devices (4, 5) being movable substantially perpendicular to said region and the portals being independently movable on the linear guides (2).

2. The device according to any one of the preceding claims,
**characterised in that**
a light, radiation and/or heat source is provided on one of the portals (1, 1') or on still further portals.

3. The device according to any one of the preceding claims,
**characterised in that**
the further portal or all portals is/are in engagement with the linear guide.

4. The device according to any one of claims 1 and 2,
**characterised in that**
the further portal is in engagement with a further linear guide.

5. The device according to any one of the preceding claims,
**characterised in that**
the material application device (4) comprises a particulate material coating device and said further material application device (5) comprises a print head and/or an extruder and/or a film coater.

6. The device according to any one of the preceding claims,
**characterised in that**
the at least one light, radiation and/or heat source is arranged so as to be movable substantially perpendicular to said region.

7. The device according to claim 6,
**characterised in that**
the material application devices (4, 5) and the light, radiation and/or heat source can be moved along lateral portal parts.

8. The device according to any one of the preceding claims, **characterised in that** the portals (1, 1') can be moved under one another or over one another, respectively.

9. The device according to any one of the preceding claims, **characterised in that** at least one peripheral device is additionally arranged in the device, said peripheral device being accessible regardless of the height of the portals (1, 1').

10. A method for the layered construction of models, wherein there are provided a region for the construction of models, preferably a construction platform, and at least one material application device (4) for applying material onto said region, said material application device (4) moving over said region, and said material application device (4) being arranged as a portal (1) so as to move over said region along at least two linear guides (2) arranged on opposite sides of said region, and said material application device (4) further being arranged around said region such that a portal (1) is formed with at least two portions extending laterally of said region, **characterised in that** at least one further material application device (5) is provided at a further portal (1') and a further material is applied to said region, the material application devices (4, 5) being movable substantially perpendicular to said region and the portals being movable independently of each other on the linear guides (2).

11. The method according to claim 10,
**characterised in that**
at least two portals (1, 1') can move under or over one another, respectively, during or after a process step.

12. The method according to any one of claims 10 to 11,
**characterised in that** a plurality of independent portals (1, 1') simultaneously perform different construction processes.

13. The method according to any one of claims 10 to 12,
**characterised in that**
a plurality of independent portals (1, 1') simultaneously perform a common construction process.

## Revendications

1. Dispositif pour la construction de modèles par couches, dans lequel on prévoit une région de construction de modèles, de préférence une plateforme de construction, et un dispositif d'application de matériaux (4) destiné à appliquer un matériau sur ladite région, ledit dispositif d'application de matériaux (4) étant disposé de manière à être déplaçable au-dessus de ladite région, et ledit dispositif d'application de matériaux (4) étant disposé de manière à constituer un portail (1) de sorte qu'il soit déplaçable au-dessus de ladite région par au moins deux guides linéaires (2) disposés de côtés opposés de ladite région, et ledit dispositif d'application de matériaux (4) étant disposé autour de ladite région de manière à constituer un portail (1) avec au moins deux sections s'étendant latéralement par rapport à ladite région,
**caractérisé en ce que**
l'on prévoit au moins un dispositif d'application de matériaux (5) additionnel destiné à appliquer un matériau additionnel sur ladite région, ledit dispositif d'application de matériaux (5) additionnel étant disposé sur un portail additionnel (1'), lesdits dispositifs d'application de matériaux (4, 5) étant déplaçables sensiblement perpendiculairement à ladite région et lesdits portails étant déplaçables de manière indépendante sur les guides linéaires (2).

2. Dispositif selon l'une quelconque des revendications précédentes,
**caractérisé en ce que** l'on prévoit une source de lumière, de rayonnement et/ou de chaleur sur l'un des portails (1, 1') ou sur encore d'autres portails.

3. Dispositif selon l'une quelconque des revendications précédentes,
**caractérisé en ce que** le portail additionnel ou tous les portails vient/viennent en prise dans le guide linéaire.

4. Dispositif selon l'une quelconque des revendications 1 et 2,
**caractérisé en ce que** le portail additionnel vient en prise dans un guide linéaire additionnel.

5. Dispositif selon l'une quelconque des revendications précédentes,
**caractérisé en ce que** le dispositif d'application de matériaux (4) comporte un dispositif d'enduction de matière particulaire et ledit dispositif d'application de matériaux (5) additionnel comporte une tête d'impression et/ou une extrudeuse et/ou un enducteur de filme.

6. Dispositif selon l'une quelconque des revendications précédentes,
**caractérisé en ce que** ladite au moins une source de lumière, de rayonnement et/ou de chaleur est disposée déplaçable de manière sensiblement perpendiculaire par rapport à ladite région.

7. Dispositif selon la revendication 6,
**caractérisé en ce que** les dispositifs d'application de matériaux (4, 5) et la source de lumière, de rayonnement et/ou de chaleur sont déplaçables le long de parties de portail latérales.

8. Dispositif selon l'une quelconque des revendications précédentes, **caractérisé en ce que** les portails (1, 1') sont déplaçables respectivement l'un au-dessous de l'autre ou l'un au-dessus de l'autre.

9. Dispositif selon l'une quelconque des revendications précédentes, **caractérisé en ce**
**que** l'on dispose en outre, dans ledit dispositif, au moins un dispositif périphérique, ledit dispositif périphérique étant accessible quelle que soit la hauteur des portails (1, 1').

10. Procédé de construction de modèles par couches, dans lequel on prévoit une région de construction de modèles, de préférence une plateforme de construction, et au moins un dispositif d'application de matériaux (4) destiné à appliquer un matériau sur ladite région, ledit dispositif d'application de matériaux (4) étant déplaçable sur ladite région, et ledit dispositif d'application de matériaux (4) étant disposé de manière à constituer un portail (1) de sorte qu'il soit déplaçable sur ladite région selon au moins deux guides linéaires (2) disposés de côtés opposés de ladite région, et ledit dispositif d'application de matériaux (4) étant disposé autour de ladite région de manière à constituer un portail (1) avec au moins deux sections s'étendant latéralement par rapport à ladite région,
**caractérisé en ce que**
l'on prévoit au moins un dispositif d'application de matériaux (5) additionnel sur un portail additionnel (1') et que l'on applique un matériau additionnel sur ladite région, lesdits dispositifs d'application de matériaux (4, 5) étant déplaçables sensiblement perpendiculairement à ladite région et lesdits portails étant déplaçables de manière indépendante l'un de l'autre sur les guides linéaires (2).

11. Procédé selon la revendication 10,
**caractérisé en ce qu'**au moins deux portails (1, 1') sont déplaçables, l'un au-dessous de l'autre ou l'un au-dessus de l'autre, pendant ou après une étape du procédé.

12. Dispositif selon l'une quelconque des revendications 10 à 11,
**caractérisé en ce que** plusieurs portails (1, 1') indépendants exécutent en même temps des procédés de construction différentes.

13. Dispositif selon l'une quelconque des revendications 10 à 12,
**caractérisé en ce que** plusieurs portails (1, 1') indépendants exécutent en même temps un procédé de construction commun.
